(19) Europäisches Patentamt
European Patent Office
Office européen des brevets

(11) EP 2 139 059 A1

(12) **EUROPEAN PATENT APPLICATION**

(43) Date of publication:
**30.12.2009 Bulletin 2009/53**

(51) Int Cl.:
***H01M 4/58*** *(2006.01)* *H01M 4/36* *(2006.01)*

(21) Application number: **09251650.9**

(22) Date of filing: **25.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **25.06.2008 JP 2008165237**
**25.05.2009 KR 20090045592**

(71) Applicant: **Samsung SDI Co., Ltd.**
**Gyeonggi-do (KR)**

(72) Inventors:
- **Maeda, Hideaki**
  **Minoo-shi**
  **Osaka (JP)**
- **Tokita, Tetsuo**
  **Minoo-shi**
  **Osaka (JP)**
- **Lee, Jea-Woan**
  **Gyeonggi-do (KR)**
- **Joon-Sup, Kim**
  **Suwon-si**
  **Gyeonggi-do (KR)**
- **Lee, Young-Jun**
  **Suwon-si**
  **Gyeonggi-do (KR)**
- **Choi, Wan-Uk**
  **Suwon-si**
  **Gyeonggi-do (KR)**

(74) Representative: **Taor, Simon Edward William**
**Marks & Clerk LLP**
**90 Long Acre**
**London**
**WC2E 9RA (GB)**

# (54) Rechargeable lithium battery

(57) A rechargeable lithium battery according to embodiments of the present invention includes a positive electrode, a negative electrode, and a non-aqueous electrolyte. The positive electrode includes a first layered lithium compound having an open circuit potential (based on lithium) of 3 V or greater, and a second layered lithium compound having an open circuit potential of less than 3 V. The second layered lithium compound is included in an amount of from about 0.99 to about 30 wt% based on a total amount of the first layered lithium compound and the second layered lithium compound.

FIG.1

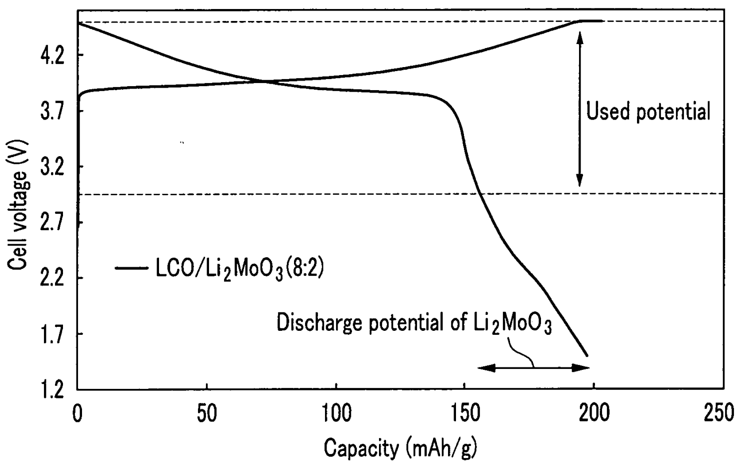


EP 2 139 059 A1

## Description

## BACKGROUND OF THE INVENTION

### 1. Field of the Invention

This disclosure relates to a rechargeable lithium battery.

### 2. Description of the Related Art

Recently, devices such as mobile phones, laptop computers and so on require higher capacity batteries. Among batteries, rechargeable lithium batteries (and in particular, their positive and negative active materials) are being actively researched in an effort to provide higher capacity and higher energy density.

The positive active material generally includes a layered lithium-transition element composite oxide, such as lithium cobalt oxide, and the negative active material generally includes a graphite-based carbon material, a silicon oxide-based composite material, silicon, a tin alloy, a lithium vanadium oxide and so on. The rechargeable lithium battery is charged and discharged by the migration and insertion of lithium ions between the positive active material and the negative active material.

The ratio of lithium ions re-inserted into the positive active material to the lithium separated from the positive active material refers to the charge and discharge efficiency of the positive active material. The ratio of re-separated lithium ions to inserted lithium refers to the charge and discharge efficiency of the negative active material. When used as negative active materials, metallic active materials, such as silicon-based materials, generally have lower charge and discharge efficiencies than positive active materials. Accordingly, the cycle characteristic of a battery is mainly determined by the amount of lithium ions re-separated from the negative active material.

However, when more lithium ions are separated by maximizing the depth of discharge of the negative electrode in order to increase the charge and discharge efficiency of the negative active material, the negative electrode and cycle characteristics gradually deteriorate.

On the other hand, when the negative electrode is operated only in the reversible region, the amount of migrating lithium ions participating in the charge and discharge is decreased, thereby decreasing the benefits of increased capacity and deteriorating cycle characteristics.

## SUMMARY OF THE INVENTION

In some embodiments of the present invention, a rechargeable lithium battery has high-capacity and good cycle characteristics.

According to one aspect of the present invention, a rechargeable lithium battery includes a positive electrode, a negative electrode, and a non-aqueous electrolyte. The positive electrode includes a first layered lithium compound having an open circuit potential (based on lithium) of 3 V or greater, and a second layered lithium compound having an open circuit potential of less than 3 V. The second layered lithium compound is included in an amount of from about 0.99 to about 30 wt% based on a total amount (100 wt%) of the first layered lithium compound and the second layered lithium compound.

In one embodiment, the first layered lithium compound and the second layered lithium compound have an initial charge and discharge efficiency difference of 50% or more (measured by charging and discharging a half cell including the first and second layered lithium compounds and a lithium counter electrode under a cut-off charge condition of 4.5V at constant current-constant voltage, and a cut-off discharge condition of 3.5V at constant current).

During the initial charge, lithium from the first layered lithium compound and the second layered lithium compound may all be present in the negative electrode. During the discharge, only lithium from the first layered lithium compound migrates to the positive electrode, and lithium from the second layered lithium compound remains in the negative electrode. During the subsequent charge and discharge, only lithium from the first layered lithium compound migrates between the negative electrode and the positive electrode.

The rechargeable lithium battery may have a lowest voltage of 2.5V or greater during charge and discharge.

The second layered lithium compound may be a lithium metal compound including a metal atom selected from Fe, Mo, Ti, Ni, Cr, V, Ru, and Cu.

In addition, the second layered lithium compound may be selected from oxides, nitrides, hydroxides, sulfides, and phosphates.

The second layered lithium compound may be included in an amount from about 10 to about 20 wt% based on the total amount of the first and second layered lithium compounds.

The first layered lithium compound may include a lithium metal compound including a metal atom selected

from Co, Ni, Al, and Mn.

The negative electrode may include a negative active material selected from materials that reversibly intercalate/deintercalate lithium ions, lithium metal, lithium metal alloys, materials capable of doping and de-doping lithium, materials capable of reversibly forming lithium-included compounds, transition metal oxides, and combinations thereof.

According to a first a first aspect of the invention, there is provided a rechargeable lithium battery as set out in Claim 1. Preferred features of this aspect are set out in Claims 2 to 9.

According to one aspect of the present invention, the cell is designed to balance the positive electrode and the negative electrode to provide a rechargeable lithium battery having good cycle characteristics.

## BRIEF DESCRIPTION OF THE DRAWINGS

FIG. 1 is a curved line graph showing the charge and discharge capacities at 4.3 to 1.5 V of a battery cell prepared substantially as in Example 1, but with a negative electrode material that includes Li metal.

FIG. 2 is a curved line graph showing the charge and discharge capacities at 4.3 to 3.0 V of a battery cell prepared substantially as in Example 1, but with a negative electrode material that includes Li metal.

FIG. 3 is a graph comparing the cycle-characteristics of the battery cells prepared as in Example 1 and Comparative Example 1.

FIG. 4 is a microscope photograph of the positive electrode prepared as in Example 1.

FIG. 5 is a graph comparing the initial capacity and capacity retention as a function of the amount of $Li_2NiO_2$ of cells prepared as in Examples 5 to 10 and Comparative Example 5.

FIG. 6 is a graph comparing the initial capacity and capacity retention as a function of the amount of $Li_2CuO_2$ of cells prepared as in Examples 11 to 16 and Comparative Example 6.

FIG. 7 is a graph comparing the initial capacity and capacity retention as a function of the amount of $LiFePO_4$ of cells prepared as in Examples 17 to 22 and Comparative Examples 7 and 8.

FIG. 8 is a graph comparing the initial capacity and capacity retention as a function of the amount of $Li_2NiO_2$ of cells prepared as in Examples 23 to 28 and Comparative Example 9.

## DETAILED DESCRIPTION OF THE INVENTION

According to one embodiment of the present invention, a rechargeable lithium battery includes a positive electrode, a negative electrode, and a non-aqueous electrolyte. The positive electrode includes a first layered lithium compound having an open circuit potential (based on lithium) of 3 V or greater, and a second layered lithium compound having an open circuit potential of less than 3 V. The second layered lithium compound is included in an amount of from about 0.99 to about 30 wt% based on the total amount (100 wt%) of the first and second layered lithium compounds.

When the rechargeable lithium battery has a lowest voltage of 2.5 V or greater before the first charge, and includes a positive electrode prepared with a first layered lithium compound and a second layered lithium compound having a low open circuit potential, lithium ions from both the first and second layered lithium compounds are separated during the first charge. However, during the subsequent discharge, lithium ions are re-inserted only in the first layered lithium compound (and are not re-inserted in the second layered lithium compound) and charged in the negative active material.

During the subsequent, second charge and discharge cycle, lithium ions are separated only from the first layered lithium compound, and are re-inserted only to the first layered lithium compound.

In other words, lithium from the first layered lithium compound and the second layered lithium compound migrates to the negative electrode during the initial charge, and is charged in the negative electrode. Then, the charged lithium decreases the potential of the negative electrode and increases the cell voltage. On the other hand, during discharge, the first layered lithium compound reacts with discharged lithium coming from the negative electrode, and the cell voltage decreases when the first layered lithium compound is charged until almost the initial state. Then, migration of lithium is completed in the negative electrode. This is caused by the charge and discharge voltage band for the device using electricity. The second layered lithium compound rarely reacts with lithium. The cell discharge voltage is cut-off due to the positive electrode potential, so the reversible potential band of the negative electrode may be limited by the band having no cycle-life deterioration.

Since lithium ions separated from the second layered lithium compound during the initial charge are charged in the negative active material, the amount of lithium ions capable of migrating increases even when the discharge depth is narrowed, and it is possible to operate the negative electrode within the reversible region. Thereby, it is possible to prevent the negative electrode from deteriorating and to improve the cycle characteristics of the battery.

In addition, it is possible to uniformly dope lithium ions in the negative active material and to prevent problems associated with the handling of unstable lithium metal (which is unstable in an air atmosphere). Such problems might include firing, and decreases in electrode flexibility, and are caused by directly doping lithium in the negative electrode.

According to one embodiment, the rechargeable lithium battery is charged and discharged at a voltage of 4.5 V or less (based on lithium). When the battery is charged at a voltage higher than about 4.5 V, the second layered lithium compound degrades, breaking down the layered structure, and the second layered lithium compound reacts with the electrolyte (i.e., it dissolves or decomposes), thereby deteriorating the cycle characteristics of the rechargeable lithium battery.

In addition, when the rechargeable lithium battery is over-discharged at under 2.5 V, lithium ions are re-inserted to the second layered lithium compound, thereby substantially preventing over-discharge.

According to one embodiment, there is a difference in the initial charge and discharge efficiency between the first layered lithium compound and the second layered lithium compound of 50% or more when the half cell is charged and discharged at a cut-off charge condition of 4.5V at constant current-constant voltage and a cut-off discharge condition of 3.5V at constant current. The larger the difference in initial efficiency, the better. When the materials having a large difference in charge and discharge efficiency are mixed, it is possible to effectively decrease the charge and discharge efficiency of the mixed positive electrode and to effectively maintain the discharge voltage of the negative electrode at a lower level. In other words, when the difference in charge and discharge efficiency is greater, a lesser amount of the second layered lithium compound is required. Thereby, reversible capacity is increased, and cell capacity is increased. That is, providing a second layered lithium compound with a lesser charge and discharge efficiency increases the charge and discharge efficiency of the positive electrode even when a lesser amount of the second layered lithium compound is used.

Both the first layered lithium compound and the second layered lithium compound are in the charged state during initial charge, but the first layered lithium compound is fully discharged while the second layered lithium compound remains in the charged state during the full discharge. Thereby, only the first layered lithium compound migrates during the subsequent charge. That is, lithium from both the first layered lithium compound and the second layered lithium compound may be present in the negative electrode during the initial charge, but only lithium from the first layered lithium compound may migrate to the positive electrode while lithium from the second layered lithium compound may remain in the negative electrode during the discharge. Also, only lithium from the first layered lithium compound may migrate between the negative electrode and the positive electrode during the subsequent charge and discharge.

According to one embodiment, the second layered lithium compound may be a lithium metal compound selected from Fe, Mo, Ti, Ni, Cr, V, Ru, and Cu.

In addition, according to one embodiment, the second layered lithium compound may be selected from oxides, nitrides, hydroxides, sulfides, and phosphates.

The first layered lithium compound may include a lithium metal compound including a metal atom selected from Co, Ni, Al, and Mn.

The positive electrode includes an active material having a first layered lithium compound having an open circuit potential (based on lithium) of about 3 V or greater and a second lithium layered compound having an open circuit potential (based on lithium) of less than about 3 V.

The first layered lithium compound may include a lithium metal compound including a metal atom selected from Co, Ni, Al, Mn, and combinations thereof.

Non-limiting examples of suitable materials for the first layered lithium compound include lithium cobalt oxide ($LiCoO_2$), lithium nickel oxide ($LiNiO_2$), lithium manganese oxide ($LiMnO_2$), etc., and combinations thereof.

The second layered lithium compound may include lithium metal compounds including a metal element selected from Fe, Mo, Ti, Ni, Cr, V, Ru, Cu, and combinations thereof.

Non-limiting examples of suitable materials for the second layered lithium compound include oxides (such as $Li_2MoO_3$, $Li_2NiO_2$, $LiFeO_2$, $Li_2CuO_2$, $Li_2RuO_3$, $Li_2TiO_3$, $LiVO_2$ and so on), nitrides (such as $Li_7MnN_4$), sulfides (such as $LiFeS_2$), hydroxides (such as LiFeOH), phosphates (such as $LiFePO_4$, $Li_3Fe_2(PO_4)_3$ and so on), $Li_2MnO_3$-$LiFeO_2$, $LiMxO_2$-$Li_2TiO_3$ ($0 \leq x \leq 0.6$, M is a trivalent atom having an average oxidation number of 3), etc., and combinations thereof.

The mixing ratio of the first layered lithium compound and the second layered lithium compound is adjusted depending upon the kinds of compounds used. According to one embodiment, for example, the amount of the second layered lithium compound is from about 0.99 to about 30 wt% based on the total amount (100 wt%) of the first and second layered lithium compounds. In another embodiment, the amount of the second layered lithium compound is from about 5 to about 20 wt%, and in a further embodiment, the amount of the second layered compound is from about 10 to about 20 wt%.

When the second layered lithium compound is present in excess, the amount of non-reversible lithium that migrates from the mixed positive electrode to the negative electrode during the first charge and not returned to the positive electrode is increased, thereby deteriorating the total reversible capacity of the battery.

The negative electrode includes a current collector and a negative active material layer disposed thereon. The negative active material layer includes a negative active material.

The negative active material may be selected from materials that reversibly intercalate/deintercalate lithium ions, lithium metal, lithium metal alloys, materials capable of doping and de-doping lithium, materials capable of reversibly

forming lithium-included compounds, transition metal oxides, and combinations thereof.

Non-limiting examples of suitable lithium metal alloys include alloys of lithium and a metal selected from Na, K, Rb, Cs, Fr, Be, Mg, Ca, Sr, Si, Sb, Pb, In, Zn, Ba, Ra, Ge, Al, Sn, and combinations thereof.

Non-limiting examples of suitable transition metal oxides, material capable of doping and de-doping lithium, and materials capable of reversibly forming lithium-included compounds include vanadium oxide, lithium vanadium oxide, Si, $SiO_x$ ($0 < x < 2$), Si-Y alloys (where Y is an element selected from alkali metals, alkaline-earth metals, group 13 elements, group 14 elements, transition elements, rare earth elements, and combinations thereof, and is not Si), Sn, $SnO_2$, Sn-Y alloys (where Y is an element selected from alkali metals, alkaline-earth metals, group 13 elements, group 14 elements, transition elements, rare earth elements, and combinations thereof, and is not Sn), and mixtures thereof. At least one of these materials may be mixed with $SiO_2$. In one embodiment, the element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Materials that can reversibly intercalate/deintercalate lithium ions include carbon materials. The carbon materials may be any generally used carbon-based negative active material in lithium ion rechargeable batteries. Non-limiting examples of suitable carbon materials include crystalline carbon, amorphous carbon, and mixtures thereof. The crystalline carbon may be non-shaped, or sheet, flake, spherical, or fiber shaped natural graphite or artificial graphite. The amorphous carbon may be soft carbon, hard carbon, mesophase pitch carbide, fired coke, or the like.

In one embodiment, the negative active material may include graphite-based carbon materials, silicon (Si), tin (Sn), a silicon alloy (Si-Y), a tin alloy(Sn-Y), silicon oxide ($SiO_2$), lithium vanadium oxide, or the like. In another embodiment, silicon, tin, compounds capable of alloying with lithium (such as silicon alloys, tin alloys). silicon oxides, lithium vanadium oxide, or the like may be used.

The capacity density of graphite-based carbon materials is from 560 to 630 $mAh/cm^3$, while the capacity density of silicon, tin, silicon alloys, tin alloys, silicon oxides, lithium vanadium oxide and so on is 850 $mAh/cm^3$ or greater.

Accordingly, it is possible to achieve a smaller sized and higher capacity battery through selection of the active material. The negative active material may be used singularly or combinations or two or more kinds of active materials may be used.

In addition, when a metal-based negative electrode is used (such as silicon, silicon alloys, silicon oxides, tin, tin alloys, tin oxides and so on), it is possible to improve the cycle-life of the negative electrode by maintaining a low discharge potential. On the other hand, when the positive electrode includes the first layered lithium compound and the second layered lithium compound, it is possible to maintain the discharge potential of the positive electrode at the conventional level and to control the discharge potential of the negative electrode to a low potential, yielding a smooth discharge curve.

The negative or positive active material layer may include a binder, and optionally, a conductive material.

The binder improves the binding properties of the active material particles with one another and with the current collector. Non-limiting examples of suitable binders include polyvinyl alcohol (PVA), carboxymethyl cellulose, hydroxypropyl cellulose, carboxylated polyvinylchloride, polyvinylfluoride, ethylene oxide-containing polymers, polyvinylpyrrolidone, polyurethane, polytetrafluoroethylene, polyvinylidene fluoride, polyethylene, polypropylene, styrene-butadiene rubbers, acrylated styrene-butadiene rubbers, epoxy resins, polyamideimide (PAI), polyimide (Pi) and the like, and combinations thereof.

The conductive material may be included to improve electrode conductivity. Any electrically conductive material may be used as a conductive material so long as it does not cause a chemical change. Non-limiting examples of suitable conductive materials include carbon-based materials (such as natural graphite, artificial graphite, carbon black, acetylene black, ketjen black, carbon fiber, and the like), metal powder or metal fiber materials (such as copper, nickel, aluminum, silver, and the like), conductive polymers (such as polyphenylene derivatives), and mixtures thereof.

In one embodiment, for example, the conductive material is selected from graphite, carbon black, acetylene black, ketjen black, carbon fiber, and metal powders.

The positive electrode or negative electrode may optionally further include additives such as fillers, dispersing agents, ion conductive materials, and the like.

A method of preparing the positive electrode or the negative electrode includes mixing the active material and the additives into a solvent (such as water or an organic solvent) to provide a slurry or a paste, coating the slurry or paste on a current collector using a doctor blade and drying the slurry or paste, and roll-pressing the coated current collector to provide a positive or negative electrode.

The current collector may include copper, nickel, stainless steel or titanium foils; copper, nickel, stainless steel or titanium sheets; copper, nickel, stainless steel or titanium nets; nickel foams; copper foams; polymer substrates coated with a conductive metal, and combinations thereof. Without a current collector, a negative electrode may be fabricated by compression into pellets.

The electrolyte may include a non-aqueous electrolyte (in which a lithium salt is dissolved in a non-aqueous organic solvent), a polymer electrolyte, an inorganic solid electrolyte, a composite material (including a polymer electrolyte

and an inorganic solid electrolyte), or the like.

The non-aqueous organic solvent acts as a medium for transmitting ions taking part in the electrochemical reaction of the battery.

The non-aqueous organic solvent may include a carbonate-based, ester-based, ether-based, ketone-based, alcohol-based, or aprotic solvent. Non-limiting examples of suitable carbonate-based solvents include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylenecarbonate (PC), butylene carbonate (BC), and the like. Non-limiting examples of suitable ester-based solvents include methyl acetate, ethyl acetate, n-propyl acetate, dimethyl acetate, methyl propionate, ethyl propionate, γ-butyrolactone, decanolide, valerolactone, mevalonolactone, caprolactone, and the like. Non-limiting examples of suitable ether-based solvents include dibutyl ether, tetraglyme, diglyme, 1,2-dimethoxyethane, 1,2-diethoxyethane, ethoxymethoxyethane, 2-methyltetrahydrofuran, tetrahydrofuran, and the like. Non-limiting examples of suitable ketone-based solvents include cyclohexanone and the like. Non-limiting examples of suitable alcohol-based solvents include ethyl alcohol, isopropyl alcohol, and so on. Non-limiting examples of suitable aprotic solvents include nitriles (such as R-CN, where R is a C2 to C20 linear, branched, or cyclic hydrocarbon, a double bond, an aromatic ring, or an ether bond), amides (such as dimethylformamide), dioxolanes (such as 1,3-dioxolane), sulfolanes, and the like.

In one embodiment, the solvent of the non-aqueous electrolyte may include linear esters (such as ethylene carbonate, propylene carbonate, dimethylcarbonate, diethylcarbonate, methylethyl carbonate, and the like), γ -lactones (such as γ - butyrolactone, and the like), linear ethers (such as 1,2-dimethoxyethane, 1,2-diethoxyethane, ethoxymethoxyethane, and the like), cyclic ethers (such as tetrahydrofurans), and nitriles (such as acetonitrile).

A single non-aqueous organic solvent may be used, or a combination of two or more solvents may be used. When the organic solvent includes a mixture, the mixture ratio can be adjusted in accordance with the desired battery performance.

The carbonate-based solvent may include a mixture of a cyclic carbonate and a linear carbonate. The cyclic carbonate and the chain carbonate may be mixed together in a volume ratio of 1 : 1 to 1 : 9, and when the mixture is used as an electrolyte, the electrolyte performance may be enhanced.

In addition, the electrolyte of the present invention may further include mixtures of carbonate-based solvents and aromatic hydrocarbon-based solvents.

The carbonate-based solvents and the aromatic hydrocarbon-based solvents may be mixed in a volume ratio of 1 : 1 to 30 : 1.

The aromatic hydrocarbon-based organic solvent may be represented by the following Chemical Formula 1.

**Chemical Formula 1**

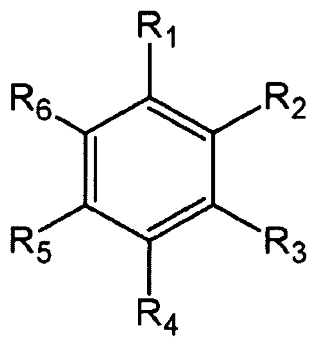

In Formula 1, each of $R_1$ to $R_6$ is independently selected from hydrogen, halogens, C1 to C10 alkyls, C1 to C10 haloalkyls, and combinations thereof.

Non-limiting examples of suitable aromatic hydrocarbon-based organic solvents include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and combinations thereof.

The non-aqueous electrolyte may further include vinylene carbonate or an ethylene carbonate-based compound of the following Chemical Formula 2.

**Chemical Formula 2**

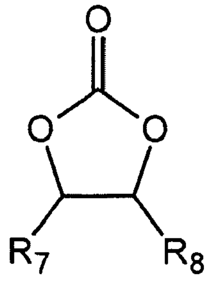

In Formula 2, each of $R_7$ and $R_8$ is independently selected from hydrogen, halogens, cyano (CN) groups, nitro ($NO_2$) groups, and C1 to C5 fluoroalkyls, provided that at least one of $R_7$ and $R_8$ is a halogen, a nitro ($NO_2$), or a C1 to C5 fluoroalkyl, and $R_7$ and $R_8$ are not both hydrogen.

Non-limiting examples of suitable ethylene carbonate-based compounds include difluoroethylene carbonate, chloroethylene carbonate, dichloroethylene carbonate, bromoethylene carbonate, dibromoethylene carbonate, nitroethylene carbonate, cyanoethylene carbonate, and fluoroethylene carbonate. The amount of the additive for improving cycle life may be adjusted within an appropriate range.

The lithium salt supplies lithium ions to the battery, enables the basic operation of the rechargeable lithium battery, and improves lithium ion transport between the positive and negative electrodes. Non-limiting examples of suitable lithium salts include supporting salts such as $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiCF_3SO_3$, $LiC_4F_9SO_3$, $LiC_6H_5SO_3$, LiSCN, $LiClO_4$, $LiAlO_2$, $LiAlCl_4$, $LiN(C_xF_{2x+1}SO_2)(C_yF_{2y+1}SO_2)$ (where x and y are natural numbers), $LiC_4P_9SO_3$, LiCl, LiI, $LiB(C_2O_4)_2$ (lithium bisoxalato borate; LiBOB), and combinations thereof. The lithium salt may be used at a concentration from about 0.1 to about 2.0M. When the lithium salt is included within this concentration range, electrolyte performance and lithium ion mobility may be enhanced due to optimal electrolyte conductivity and viscosity.

In one embodiment, the lithium salt may be selected from $LiAsF_6$, $LiBF_4$, $LiPF_6$, $LiAlCl_4$, $LiClO_4$, $LiCF_3SO_3$, $LiSbF_6$, LiSCN, LiCl, $LiC_6H_5SO_3$, $LiN(CF_3SO_2)_2$, $LiC(CF_3SO_2)_3$, $LiC_4P_9SO_3$, and the like.

Non-limiting examples of suitable separator materials include polyethylene, polypropylene, polyvinylidene fluoride, and multi-layers thereof (such as a polyethylene/polypropylene double-layered separator, a polyethylene/polypropylene/polyethylene triple-layered separator, and a polypropylene/polyethylene/polypropylene triple-layered separator).

In one embodiment, the separator may include a porous film including a polyolefin such as polypropylene or polyethylene.

Rechargeable lithium batteries may be classified as lithium ion batteries, lithium ion polymer batteries, and lithium polymer batteries according to the presence of a separator and the kind of electrolyte used in the battery. Rechargeable lithium batteries may have a variety of shapes and sizes, and include cylindrical, prismatic, or coin-type batteries, and may be thin film batteries or rather bulky in size. Structures and fabricating methods for lithium ion batteries pertaining to the present invention are well known in the art.

The following examples are provided for illustrative purposes only, and do not limit the scope of the present invention.

**Fabrication of 2032 Type Battery Cell**

**Example 1**

2 wt% of a polyvinylidene fluoride binder (manufactured by Kureha Corporation, #1100) was dissolved in N-methyl-2-pyrrolidone to provide a solution. 77 wt% of $LiCoO_2$ as a first layered lithium compound, 19 wt% of $Li_2MoO_3$ as a second layered lithium compound, and 2 wt% of electrically conductive carbon (Super-P) were mixed in the solution to provide a slurry. A half cell including an electrode having the first layered lithium compound and the second layered lithium compound and a lithium counter electrode was charged at constant current and constant voltage until the cell reached 4.5 V, and discharged at constant voltage until the cell reached 3.5V. Initial charge and discharge efficiency

were measured. The measurement results show that the initial charge and discharge efficiency of $LiCoO_2$ was 96%, and that of $Li_2MoO_3$ was 0.1%. The obtained positive electrode slurry was uniformly coated on an Al thin film having a thickness of 20 μ m and dried to provide a positive electrode. The positive electrode had a weight ratio of active material : electrically conductive carbon : poly vinylidene fluoride of 96: 2: 2.

Subsequently, a mixture of $Li_{1.1}V_{0.9}O_2$ (lithium vanadium oxide) powder and carbon material powder was used as a negative active material. 90 wt% of the $Li_{1.1}V_{0.9}O_2$ powder and carbon material powder and 10 wt% of a polyvinylidene fluoride binder were mixed and dispersed in N-methyl-2-pyrrolidone to provide a negative electrode slurry. The negative electrode slurry was uniformly coated on a copper thin film having a thickness of 20 μ m and dried to provide a negative electrode.

A 20 μ m-thick polypropylene separator was interposed between the obtained positive electrode and the negative electrode and a non-aqueous electrolyte was added to provide a 2032 coin-type rechargeable lithium battery cell. The non-aqueous electrolyte was prepared by dissolving $LiPF_6$ in a mixed solvent of ethylene carbonate and diethyl carbonate (3:7 volume ratio) to a concentration of 1.50 mol/L.

**Example 2**

A rechargeable lithium battery cell was fabricated as in Example 1, except that the positive active material included 91 wt% of $LiCoO_2$ as the first layered lithium compound, and 5 wt% of $Li_2MoO_3$ as the second layered lithium compound.

**Example 3**

A rechargeable lithium battery cell was fabricated as in Example 1, except that the positive active material included 91 wt% of $LiCoO_2$ as the first layered lithium compound, and 5 wt% of $Li_2MoO_3$ as the second layered lithium compound, and the negative active material included SiO instead of a mixture of $Li_{1.1}V_{0.9}O_2$ powder and carbon material powder.

**Example 4**

A rechargeable lithium battery cell was fabricated as in Example 1, except that the negative active material included SiO instead of a mixture of $Li_{1.1}V_{0.9}O_2$ powder and carbon material powder.

**Comparative Example 1**

A rechargeable lithium battery cell was fabricated as in Example 1, except that the positive active material included only 96 wt% of $LiCoO_2$ instead of 77 wt% of $LiCoO_2$ and 19 wt% of $Li_2MoO_3$.

**Comparative Example 2**

A rechargeable lithium battery cell was fabricated as in Example 1, except that the positive active material included 58 wt% of $LiCoO_2$ as the first layered lithium compound, and 38 wt% of $Li_2MoO_3$ as the second layered lithium compound.

**Comparative Example 3**

A rechargeable lithium battery cell was fabricated as in Example 1, except that the positive active material included only 96 wt% of $LiCoO_2$ instead of 77 wt% of $LiCoO_2$ and 19 wt% of $Li_2MoO_3$ , and the negative active material included SiO instead of a mixture of $Li_{1.1}V_{0.9}O_2$ powder and carbon material powder.

**Comparative Example 4**

A rechargeable lithium battery cell was fabricated as in Example 1, except that the positive active material included 58 wt% of $LiCoO_2$ as the first lithium layered compound and 38 wt% of $Li_2MoO_3$ as the second lithium layered compound, and the negative active material included SiO instead of a mixture of $Li_{1.1}V_{0.9}O_2$ powder and carbon material powder.

**Measurement of Initial Capacity and Capacity Retention**

Each rechargeable lithium battery cell prepared according to Examples 1 to 4 and Comparative Examples 1 to 4 was charged at a temperature of 25 ° C at constant current-constant voltage (constant current: 0.1C) until it reached 4.2V, and discharged at constant current (0.1 C)(first cycle) until it reached 2.5 V. At the second charge and discharge, the current value was set at 0.2 C. At the third charge and discharge cycle, the current value was set at 0.5 C. After the fourth charge and discharge cycle, the current value was set at 1 C. Charge and discharge were repeated for 300 cycles. Discharge capacity at the fourth cycle was taken as the base value (reported as 100%), and capacity retention was measured after the 300th cycle. The results are shown in the following Table 1. For the examples including negative active materials of lithium vanadium oxide and carbon (LVO-carbon), initial capacity was measured and calculated by comparing the capacity at the fourth cycle of Examples 1 and 2 and Comparative Example 2 to 100% of the capacity of the fourth cycle of Comparative Example 1 (including the positive active material without the second layered lithium compound ($Li_2MoO_3$)). Similarly, for the examples including the SiO negative active material, initial capacity was measured and calculated by comparing the capacity at the fourth cycle of Examples 3 and 4 and Comparative Example 2 to 100% of the capacity of the fourth cycle of Comparative Example 3 (including the positive active material without the second layered lithium compound ($Li_2MoO_3$)).

**Table 1**

| | | Amount of $Li_2MoO_3$ added to positive active material [wt%] | Negative active material | Initial capacity [%] | Capacity retention [%] |
|---|---|---|---|---|---|
| Ex. | 1 | 20 | LVO-carbon | 80 | 92 |
| | 2 | 5 | LVO-carbon | 96 | 90 |
| | 3 | 5 | SiO | 94 | 85 |
| | 4 | 20 | SiO | 82 | 87 |
| Comp. Ex. | 1 | 0 | LVO-carbon | 100 | 70 |
| | 2 | 40 | LVO-carbon | 62 | 83 |
| | 3 | 0 | SiO | 100 | 61 |
| | 4 | 40 | SiO | 58 | 84 |

As shown in Table 1, when the second layered lithium compound was added in excess, it might cause deterioration of the initial capacity of the battery. On the other hand, when it was added in an appropriate amount, the cycle characteristics were improved while maintaining high-capacity.

FIG.1 shows the capacity of a battery prepared substantially as in Example 1 (except that the negative active material was Li metal), that has been charged and discharged at 4.3 to 1.5 V. FIG. 2 shows the capacity of a battery prepared substantially as in Example 1 (except that the negative active material was Li metal), that has been charged and discharged at 4.3 to 3.0 V. As shown in FIG. 1, the discharge potential of $Li_2MoO_3$ was observed to be 3 V or less. In addition, as shown in FIG. 2, when the lowest voltage was set to 3 V, the discharge potential of $Li_2MoO_3$ was not observed, and $Li_2MoO_3$ was reacted only in the initial charge, so it was observed that only $LiCoO_2$ was reacted after the subsequent charge.

In addition, FIG. 3 compares the capacity retention of Example 1 to Comparative Example 1. As shown in FIG. 3, it is confirmed that the capacity retention of Comparative Example 1 deteriorated after repeating the cycle, but the capacity retention of Example 1 maintained at 95% or greater even after the 100th cycle.

FIG. 4 is a microscope photograph (magnification: 3,500 times) of the positive electrode obtained from Example 1. As shown in the figure, it is confirmed that the first layered lithium compound and the second layered lithium compound were suitably mixed.

**Manufacture of 18650 Type Battery Cell**

**Example 5**

2 wt% of a polyvinylidene fluoride binder (manufactured by Kureha Corporation, #1100) was dissolved in N-methyl-2-pyrrolidone to provide a solution. 91 wt% of $LiCoO_2$ as a first layered lithium compound, 5 wt% of $Li_2NiO_2$ as

a second layered lithium compound, and 2 wt% of electrically conductive carbon were mixed in the solution to provide a slurry. A half cell including an electrode having the first layered lithium compound and the second layered lithium compound and a lithium counter electrode was charged at constant current and constant voltage until it reached 4.5 V, and discharged at constant voltage until it reached 3.5V. Initial charge and discharge efficiency was measured. The measurement results show that the initial charge and discharge efficiency of $LiCoO_2$ was 96%, and that of $Li_2NiO_2$ was 17%. The obtained positive electrode slurry was uniformly coated on an Al thin film having a thickness of 20 μm and dried to provide a positive electrode. The positive electrode had a weight ratio of active material : electrically conductive carbon : polyvinylidene fluoride of 96: 2: 2.

Subsequently, carbon-coated SiO was used as a negative active material. 90 wt% of the carbon-coated SiO and 10 wt% of a polyvinylidene fluoride binder were mixed and dispersed in N-methyl-2-pyrrolidone to provide a negative electrode slurry. The negative electrode slurry was uniformly coated on a copper thin film having a thickness of 20 μm and dried to provide a negative electrode.

A 20 μm-thick polypropylene separator was interposed between the obtained positive electrode and the negative electrode and a non-aqueous electrolyte was added to provide a 18650 coin-type rechargeable lithium battery cell. The non-aqueous electrolyte was prepared by dissolving $LiPF_6$ into a mixed solvent of ethylene carbonate and diethyl carbonate (3:7 volume ratio) to a concentration of 1.50 mol/L.

**Example 6**

A rechargeable lithium battery cell was fabricated as in Example 5, except that the positive active material included 86 wt% of $LiCoO_2$ as the first layered lithium compound and 10 wt% of $Li_2NiO_2$ as the second layered lithium compound.

**Example 7**

A rechargeable lithium battery cell was fabricated as in Example 5, except that the positive active material included 82 wt% of $LiCoO_2$ as the first layered lithium compound and 14 wt% of $Li_2NiO_2$ as the second layered lithium compound.

**Example 8**

A rechargeable lithium battery cell was fabricated as in Example 5, except that the positive active material included 77 wt% of $LiCoO_2$ as the first layered lithium compound and 19 wt% of $Li_2NiO_2$ as the second layered lithium compound.

**Example 9**

A rechargeable lithium battery cell was fabricated as in Example 5, except that the positive active material included 72 wt% of $LiCoO_2$ as the first lithium layered compound and 24 wt% of $Li_2NiO_2$ the second lithium layered compound.

**Example 10**

A rechargeable lithium battery cell was fabricated as in Example 5, except that the positive active material included 67 wt% of $LiCoO_2$ as the first layered lithium compound and 29 wt% of $Li_2NiO_2$ as the second layered lithium compound.

**Example 11**

A rechargeable lithium battery cell was fabricated as in Example 5, except that 5 wt% of $Li_2CuO_2$ was used as the second layered lithium compound instead of 5 wt% of $Li_2NiO_2$. When a half cell including an electrode with the first layered lithium compound and the second layered lithium compound and a lithium counter electrode was charged at constant current and constant voltage until it reached 4.5 V and discharged at constant voltage until it reached 3.5V, the initial charge and discharge efficiency of $Li_2CuO_2$ was 4.5%.

**Example 12**

A rechargeable lithium battery cell was fabricated as in Example 11, except that the positive active material

included 86 wt% of $LiCoO_2$ as the first layered lithium compound and 10 wt% of $Li_2CuO_2$ as the second layered lithium compound.

**Example 13**

A rechargeable lithium battery cell was fabricated as in Example 11, except that the positive active material included 82 wt% of $LiCoO_2$ as the first layered lithium compound and 14 wt% of $Li_2CuO_2$ as the second layered lithium compound.

**Example 14**

A rechargeable lithium battery cell was fabricated as in Example 11, except that the positive active material included 77 wt% of $LiCoO_2$ as the first layered lithium compound and 19 wt% of $Li_2CuO_2$ as the second layered lithium compound.

**Example 15**

A rechargeable lithium battery cell was fabricated as in Example 11, except that the positive active material included 72 wt% of $LiCoO_2$ as the first layered lithium compound and 24 wt% of $Li_2CuO_2$ as the second layered lithium compound.

**Example 16**

A rechargeable lithium battery cell was fabricated as in Example 11, except that the positive active material included 67 wt% of $LiCoO_2$ as the first layered lithium compound and 29 wt% of $Li_2CuO_2$ as the second layered lithium compound.

**Example 17**

A rechargeable lithium battery cell was fabricated as in Example 5, except that the positive active material included 5 wt% of $LiFePO_4$ as the second layered lithium compound instead of 5 wt% of $Li_2NiO_2$. A half cell including an electrode with the first layered lithium compound and the second layered lithium compound and a lithium counter electrode was charged at constant current and constant voltage until it reached 4.5 V and discharged at constant voltage until it reached 3.5V. Initial charge and discharge efficiency was measured, and the results show that the initial charge and discharge efficiency of $LiFePO_4$ was 0.7%.

**Example 18**

A rechargeable lithium battery cell was fabricated as in Example 17, except that the positive active material included 86 wt% of $LiCoO_2$ as the first layered lithium compound and 10 wt% of $LiFePO_4$ as the second layered lithium compound.

**Example 19**

A rechargeable lithium battery cell was fabricated as in Example 17, except that the positive active material included 82 wt% of $LiCoO_2$ as the first layered lithium compound and 14 wt% of $LiFePO_4$ as the second layered lithium compound.

**Example 20**

A rechargeable lithium battery cell was fabricated as in Example 17, except that the positive active material included 77 wt% of $LiCoO_2$ as the first layered lithium compound and 19 wt% of $LiFePO_4$ as the second layered lithium compound.

**Example 21**

A rechargeable lithium battery cell was fabricated as in Example 17, except that the positive active material included 72 wt% of $LiCoO_2$ as the first layered lithium compound and 24 wt% of $LiFePO_4$ as the second layered lithium

compound.

**Example 22**

A rechargeable lithium battery cell was fabricated as in Example 17, except that the positive active material included 67 wt% of $LiCoO_2$ as the first layered lithium compound and 29 wt% of $LiFePO_4$ as the second layered lithium compound.

**Example 23**

A rechargeable lithium battery cell was fabricated as in Example 5, except that the electrode was previously charged with lithium in an irreversible amount before associating the cell.

**Example 24**

A rechargeable lithium battery cell was fabricated as in Example 23, except that the positive active material included 86 wt% of $LiCoO_2$ as the first layered lithium compound and 10 wt% of $Li_2NiO_2$ as the second layered lithium compound.

**Example 25**

A rechargeable lithium battery cell was fabricated as in Example 23, except that the positive active material included 82 wt% of $LiCoO_2$ as the first layered lithium compound and 14 wt% of $Li_2NiO_2$ as the second layered lithium compound.

**Example 26**

A rechargeable lithium battery cell was fabricated as in Example 23, except that the positive active material included 77 wt% of $LiCoO_2$ as the first layered lithium compound and 19 wt% of $Li_2NiO_2$ as the second layered lithium compound.

**Example 27**

A rechargeable lithium battery cell was fabricated as in Example 23, except that the positive active material included 72 wt% of $LiCoO_2$ as the first layered lithium compound and 24 wt% of $Li_2NiO_2$ as the second layered lithium compound.

**Example 28**

A rechargeable lithium battery cell was fabricated as in Example 23, except that the positive active material included 67 wt% of $LiCoO_2$ as the first layered lithium compound and 29 wt% of $Li_2NiO_2$ as the second layered lithium compound.

**Comparative Example 5**

A rechargeable lithium battery cell was fabricated as in Example 5, except that the positive active material included only 96 wt% of $LiCoO_2$ instead of 91 wt% of $LiCoO_2$ and 5 wt% of $Li_2NiO_2$.

**Comparative Example 6**

A rechargeable lithium battery cell was fabricated as in Example 11, except that the positive active material included only 96 wt% of $LiCoO_2$ instead of 91 wt% of $LiCoO_2$ and 5 wt% of $Li_2CuO_2$.

**Comparative Example 7**

A rechargeable lithium battery cell was fabricated as in Example 17, except that the positive active material included only 96 wt% of $LiCoO_2$ instead of 91 wt% of $LiCoO_2$ and 5 wt% of $LiFePO_4$.

**Comparative Example 8**

A rechargeable lithium battery cell was fabricated as in Example 17, except that the positive active material included only 62 wt% of $LiCoO_2$ as the first layered lithium compound and 34 wt% of $LiFePO_4$ as the second layered lithium compound.

**Comparative Example 9**

A rechargeable lithium battery cell was fabricated as in Example 23, except that the positive active material included only 96 wt% of $LiCoO_2$ instead of 91 wt% of $LiCoO_2$ and 5 wt% of $Li_2NiO_2$.

**Measurement of Initial Capacity, Discharge Potential Control, and Capacity Retention**

Each rechargeable lithium battery cell prepared according to Examples 5 to 28 and Comparative Examples 5 to 9 was charged at a temperature of 25 ° C at constant current and constant voltage (0.1C constant current) until it reached 4.5V, and discharged at constant current (0.1 C) until it reached 2.5V. At the second charge and discharge cycle, the current value was 0.2C. At the third charge and discharge cycle, the current value was 0.5C. At the fourth cycle, the current value was 1C. Under these conditions, charge and discharge were repeated for 100 cycles, capacity retention after the 100th cycle was measured, and it was confirmed that the discharge potential of the negative electrode through 3 electrode cell analyses was controlled. The initial capacities of Examples 5-10 were calculated using the capacity after the fourth cycle of Comparative Example 5 (without the second layered lithium compound) as the base value (reported as 100%). Table 2 and FIG. 5 show the initial capacities and capacity retention values of Examples 5 to 10 and Comparative Example 5. The initial capacities of Examples 11-16 were calculated using the capacity after the fourth cycle of Comparative Example 6 (without the second layered lithium compound) as the base value (reported as 100%). Table 3 and FIG. 6 show the initial capacities and capacity retention values of Examples 11 to 16 and Comparative Example 6. The initial capacities of Examples 17-22 were calculated using the capacity after the fourth cycle of Comparative Example 7 (without the second layered lithium compound) as the base value (reported as 100%). Table 4 and FIG. 7 show the initial capacities and capacity retention values of Examples 17 to 22 and Comparative Examples 7 and 8. The initial capacities of Examples 23-28 were calculated using the capacity after the fourth cycle of Comparative Example 9 (without the second layered lithium compound) as the base value (reported as 100%). Table 5 and FIG. 8 show the initial capacities and capacity retention values of Examples 23 to 28 and Comparative Example 9.

**Table 2**

| | Amount of $Li_2NiO_2$ in positive active material [%] | Discharge cut-off voltage [V] | Initial capacity [%] | Capacity retention [%] |
|---|---|---|---|---|
| Comparative Example 5 | 0 | 1.42 | 100.0 | 71.7 |
| Example 5 | 5 | 1.37 | 101.9 | 77.3 |
| Example 6 | 10 | 1.32 | 106.4 | 82.1 |
| Example 7 | 15 | 1.25 | 108.2 | 86.9 |
| Example 8 | 20 | 1.04 | 109.0 | 89.9 |
| Example 9 | 25 | 0.77 | 99.3 | 90.2 |
| Example 10 | 30 | 0.62 | 86 | 91.0 |

As shown in Table 2 and FIG. 5, it is confirmed that initial capacity and cycle-life characteristics are improved by adding even a small amount of $Li_2NiO_2$ as the second layered lithium compound. Particularly, the best capacity results were obtained in Example 8 in which 20 wt% of $Li_2NiO_2$ was added, and the cycle-life characteristics were also improved. However, when the $Li_2NiO_2$ was added in an amount more than 25 wt%, the initial capacity decreased. It is understood that this may have been caused by a deterioration in the pressing characteristic and the initial efficiency of the positive electrode as well as by the increased amount of the second layered lithium compound. The efficiency of the positive electrode was relatively decreased upon increasing the amount of $Li_2NiO_2$ up to 20 %. However, the cell capacity was determined by the efficiency of the negative electrode and not by the efficiency of the positive electrode since the negative electrode shows relatively lower efficiency. The capacity of $Li_2NiO_2$ had more charged amount per volume (mAh/g,

mAh/cc) than that of the mixed LCO positive electrode, so the cell capacity was increased. When the amount of the second layered lithium compound is 20 % or more, the efficiency of the positive electrode is less than the efficiency of the negative electrode, and the cell capacity is determined by the efficiency of the positive electrode. Accordingly, the mixed positive electrode in which the second layered lithium compound is added at 25 % shows a reverse phenomenon in which the cell capacity is even decreased. Accordingly, it is understood that the charge and discharge efficiency of the positive electrode decreases as the amount of the second layered lithium compound increases, thereby decreasing the reversible capacity and the initial capacity of the positive electrode.

**Table 3**

| | Amount of $Li_2CuO_2$ in positive active material [%] | Discharge cut-off voltage [V] | Initial capacity [%] | Capacity retention [%] |
|---|---|---|---|---|
| Comparative Example 6 | 0 | 1.42 | 100.0 | 71.7 |
| Example 11 | 5 | 1.33 | 104.9 | 78.2 |
| Example 12 | 10 | 1.18 | 106.4 | 87.3 |
| Example 13 | 15 | 0.78 | 106.7 | 92.0 |
| Example 14 | 20 | 0.63 | 97.3 | 92.5 |
| Example 15 | 25 | 0.55 | 87.6 | 92.8 |
| Example 16 | 30 | 0.50 | 77.5 | 91.5 |

As shown in Table 3 and FIG. 6, when the second layered lithium compound was $Li_2CuO_2$, the cell capacity and the cycle-life characteristics were improved by adding even a small amount. However, the capacity characteristic and the charge and discharge efficiency characteristic of $Li_2CuO_2$ were different from those of $Li_2NiO_2$. The cell capacity was maximized when the second layered lithium compound was added in amount of about 15 wt%, and the capacity was decreased when the second layered lithium compound was added in an amount of more than about 20 wt%, but the capacity retention was good until 30 wt%.

**Table 4**

| | Amount of $LiFePO_4$ in positive active material [%] | Discharge cut-off voltage [V] | Initial capacity [%] | Capacity retention [%] |
|---|---|---|---|---|
| Comparative Example 7 | 0 | 1.42 | 100.0 | 71.7 |
| Example 17 | 5 | 1.40 | 99.7 | 71.6 |
| Example 18 | 10 | 1.40 | 99.7 | 72.1 |
| Example 19 | 15 | 1.39 | 99.6 | 74.9 |
| Example 20 | 20 | 1.27 | 98.0 | 79.8 |
| Example 21 | 25 | 1.14 | 96.1 | 85.2 |
| Example 22 | 30 | 0.88 | 91.2 | 91.3 |
| Comparative Example 8 | 35 | 0.71 | 85.2 | 91.5 |

As shown in Table 4 and FIG. 7, the negative discharge potential of $LiFePO_4$ was controlled, and the cycle-life characteristic was improved as long as the amount of the $LiFePO_4$ was 15 wt% or more.

**Table 5**

| | Amount of $Li_2NiO_2$ in positive active material [%] material | Discharge cut-off voltage [V] | Initial capacity [%] | Capacity retention [%] |
|---|---|---|---|---|
| Comparative Example 9 | 0 | 1.29 | 100.0 | 80.1 |
| Example 23 | 5 | 0.99 | 100.4 | 86.2 |
| Example 24 | 10 | 0.8 | 97.5 | 90.5 |
| Example 25 | 15 | 0.68 | 94.0 | 91.5 |
| Example 26 | 20 | 0.6 | 88.9 | 92.0 |
| Example 27 | 25 | 0.54 | 82.0 | 91.3 |
| Example 28 | 30 | 0.49 | 74.2 | 90.9 |

Firstly, a positive electrode was prepared with $Li_2NiO_2$ as the second layered lithium compound. The positive electrode was that obtained from Examples 5 to 10. However, each negative electrode used in Examples 23 to 28 was a precharged electrode in which the lithium ions were previously charged in the negative electrode (different from the negative electrodes used in Examples 5 to 10). The precharged electrodes showed a charge and discharge efficiency of 90% at a cut-off discharge of 1.0V.

As shown in Table 5 and FIG. 8, it is confirmed that the cycle-life characteristic was improved with respect to the discharge potential control as the amount of the second layered lithium compound increased. Since pre-lithiated (lithium is previously oxidized) negative electrodes were used, even Comparative Example 11 (in which the second layered lithium compound was not added) had a lower discharge potential than that of Comparative Example 5, and had better cycle-life characteristics. However, it is confirmed that the capacity gradually decreased as the amount of the second layered lithium compound increased. The charge and discharge efficiency of the positive electrode gradually decreased as the amount of the second layered lithium compound increased, and the capacity control electrode was transferred from the negative electrode to the positive electrode.

While this invention has been illustrated and described with reference to certain exemplary embodiments, it is understood by those of ordinary skill in the art that various modifications can be made to the described embodiments without departing from the scope of the present invention, as defined in the appended claims.

## Claims

**1.** A rechargeable lithium battery comprising:

a positive electrode comprising:

a first layered lithium compound having an open circuit potential based on lithium of 3 V or greater, and
a second layered lithium compound having an open circuit potential based on lithium of less than 3 V, wherein the second layered lithium compound is present in an amount of from about 0.99 to about 30 wt% based on a total amount of the first layered lithium compound and the second layered lithium compound;

a negative electrode, and
a non-aqueous electrolyte.

**2.** A rechargeable lithium battery according to claim 1, wherein when a half cell comprising the positive electrode and a lithium counter electrode is charged at constant current and constant voltage to a charge cut-off voltage of 4.5V and discharged at constant voltage to a discharge cut-off voltage of 3.5V, there is a difference in initial charge and discharge efficiency between the first layered lithium compound and the second layered lithium compound of about 50% or greater.

**3.** A rechargeable lithium battery according to claim 1 or 2, wherein:

during initial charge, lithium from the first layered lithium compound and lithium from the second layered lithium

compound are present in the negative electrode;
during initial discharge, lithium from the first layered lithium compound migrates to the positive electrode, and lithium from the second layered lithium compound remains in the negative electrode; and
during a subsequent charge and discharge, lithium from the first layered lithium compound migrates between the negative electrode and the positive electrode.

**4.** A rechargeable lithium battery according to any one of claims 1 to 3, wherein the rechargeable lithium battery is to set a lowest voltage of about 2.5V or greater during charge and discharge.

**5.** A rechargeable lithium battery according to any one of claims 1 to 4, wherein the second layered lithium compound comprises a lithium metal compound comprising a metal atom selected from the group consisting of Fe, Mo, Ti, Ni, Cr, V, Ru, and Cu.

**6.** A rechargeable lithium battery according to any one of claims 1 to 5, wherein the second layered lithium compound is selected from the group consisting of oxides, nitrides, hydroxides, sulfides, and phosphates.

**7.** A rechargeable lithium battery according to any one of claims 1 to 6, wherein the second layered lithium compound is present in an amount of from about 10 to about 20 wt% based on a total amount of the first layered lithium compound and the second layered lithium compound.

**8.** A rechargeable lithium battery according to any one of claims 1 to 7, wherein the first layered lithium compound comprises a lithium metal compound comprising a metal element selected from the group consisting of Co, Ni, Al, and Mn.

**9.** A rechargeable lithium battery according to any one of claims 1 to 8, wherein the negative electrode comprises a negative active material comprising a material selected from the group consisting of materials that reversibly intercalate/deintercalate lithium ions, lithium metal, lithium metal alloys, materials capable of doping and de-doping lithium, material capable of reversibly forming lithium-included compounds, transition metal oxides, and combinations thereof.

# FIG.1

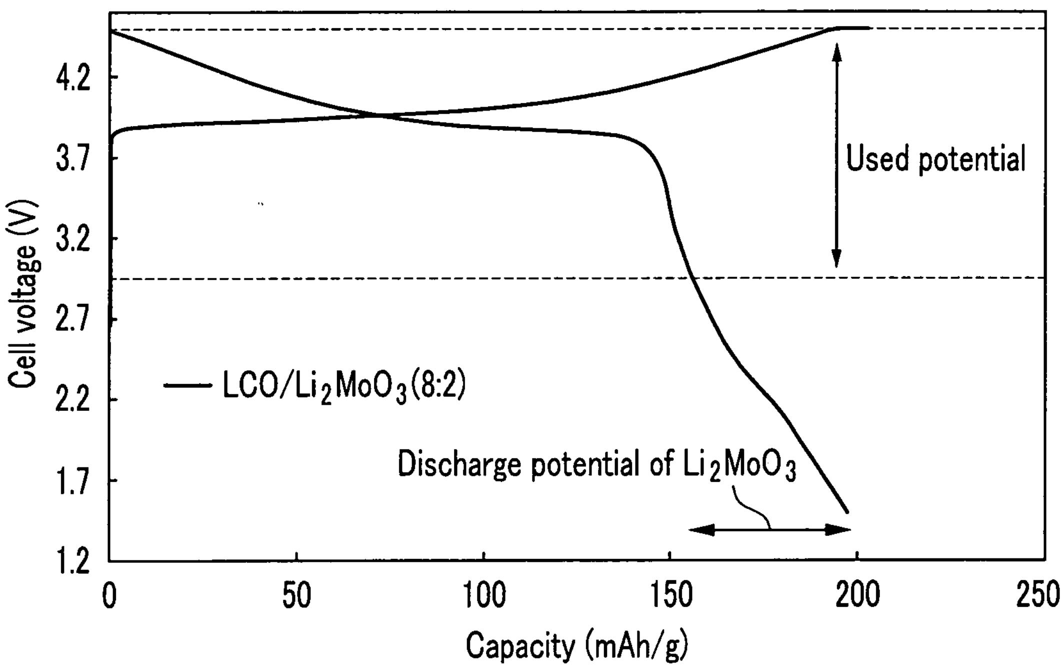

4.2
3.7
3.2
2.7
2.2
1.7
1.2
Cell voltage (V)
Used potential
— LCO/Li2MoO3(8:2)
Discharge potential of Li2MoO3
0
50
100
150
200
250
Capacity (mAh/g)

FIG.2

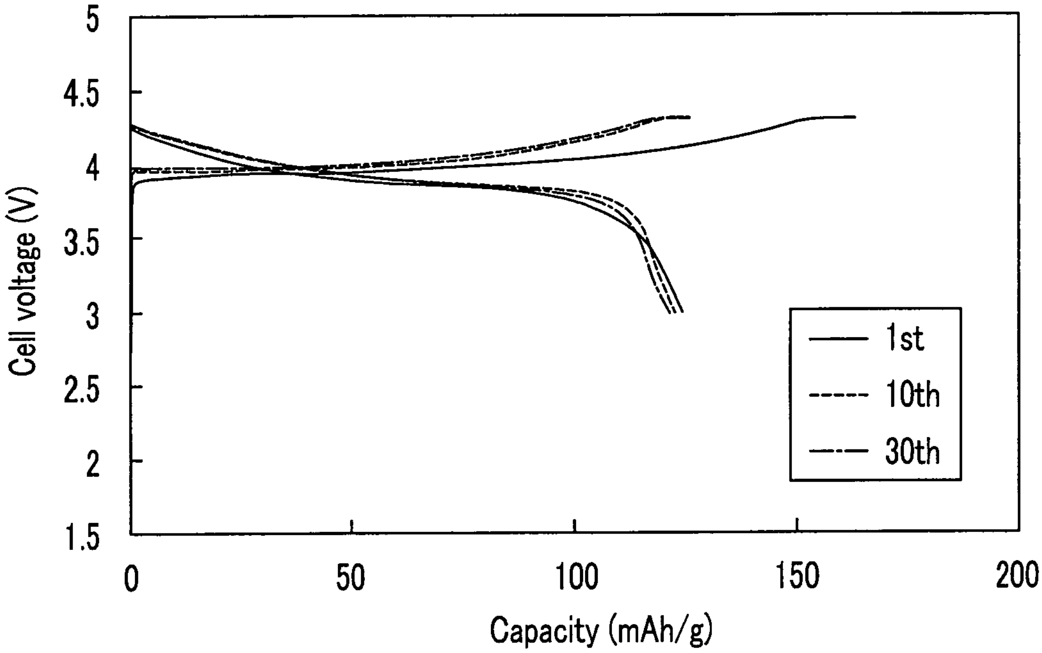
5
4.5
4
3.5
3
2.5
2
1.5
Cell voltage (V)
0
50
100
150
200
Capacity (mAh/g)
1st
10th
30th

FIG.3

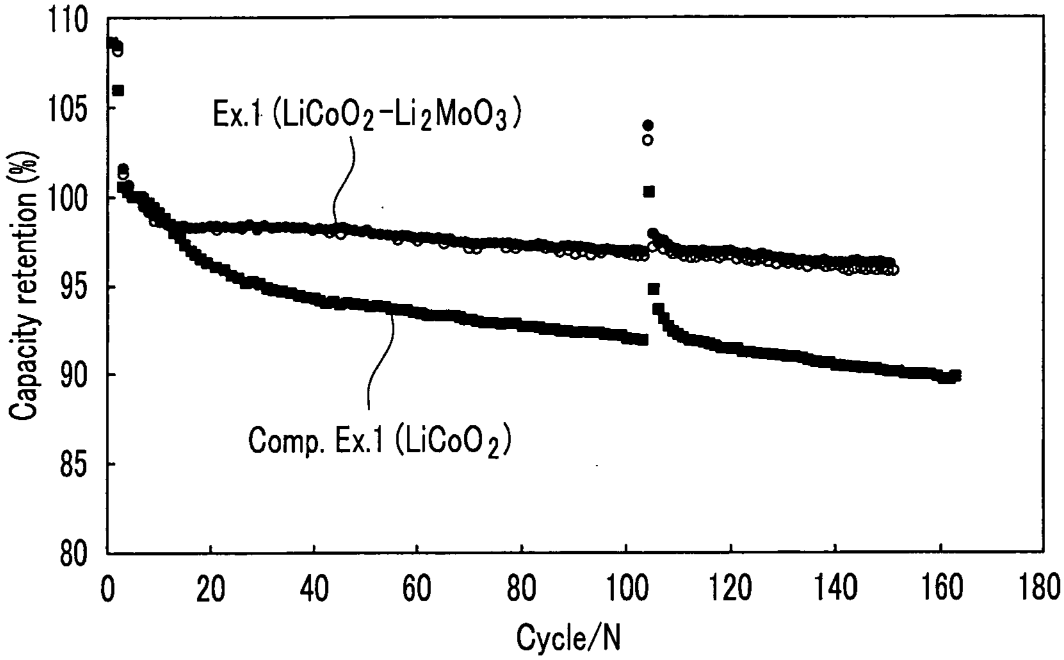
110
105
100
95
90
85
80
Capacity retention (%)
0
20
40
60
80
100
120
140
160
180
Cycle/N
Ex.1 (LiCoO2-Li2MoO3)
Comp. Ex.1 (LiCoO2)

FIG.4

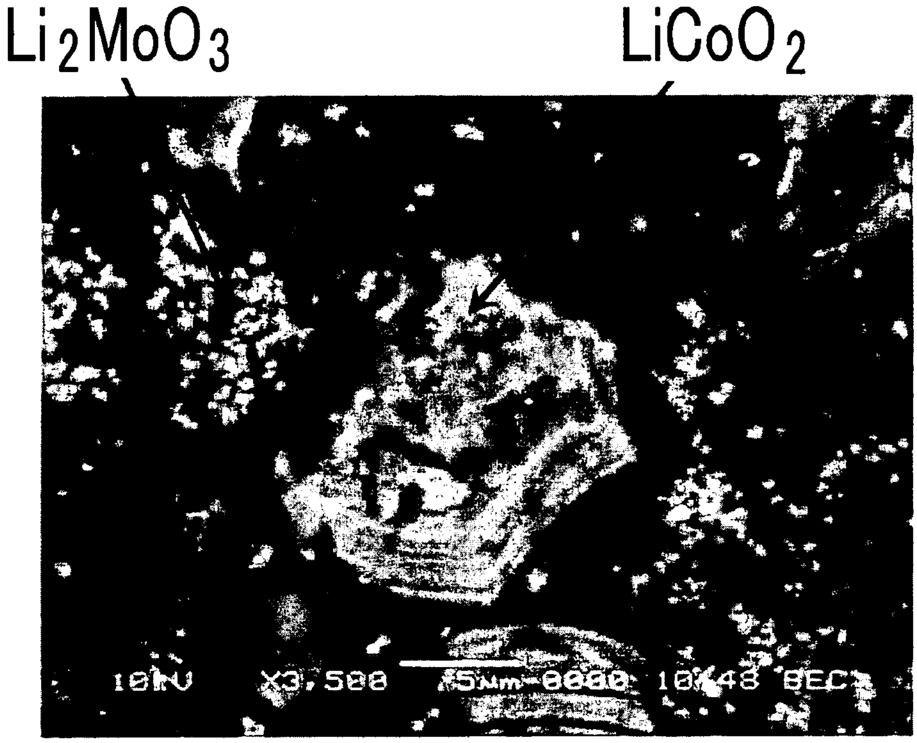

# FIG.5

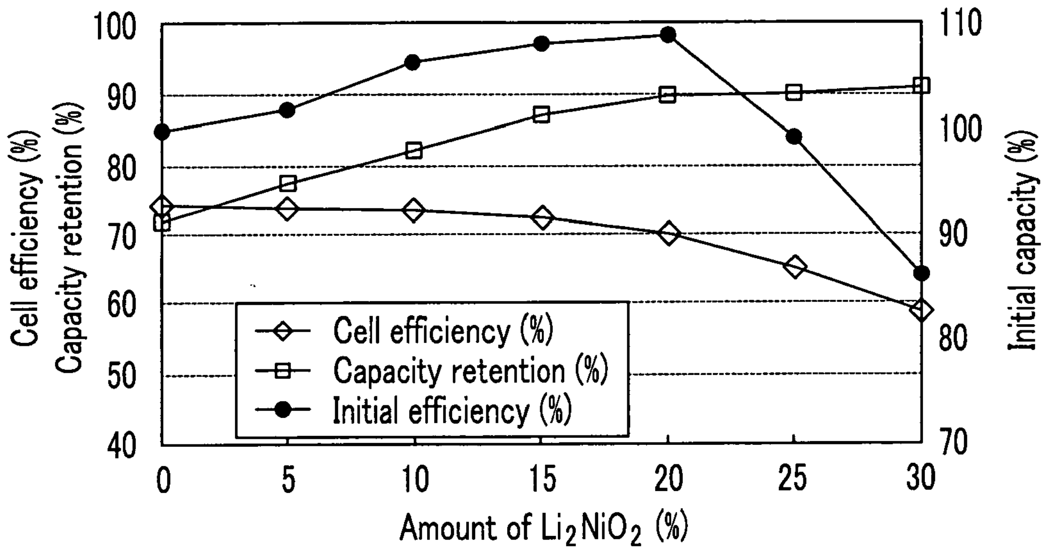
100
90
80
70
60
50
40
Cell efficiency (%)
Capacity retention (%)
110
100
90
80
70
Initial capacity (%)
Cell efficiency (%)
Capacity retention (%)
Initial efficiency (%)
0
5
10
15
20
25
30
Amount of Li2NiO2 (%)

FIG.6

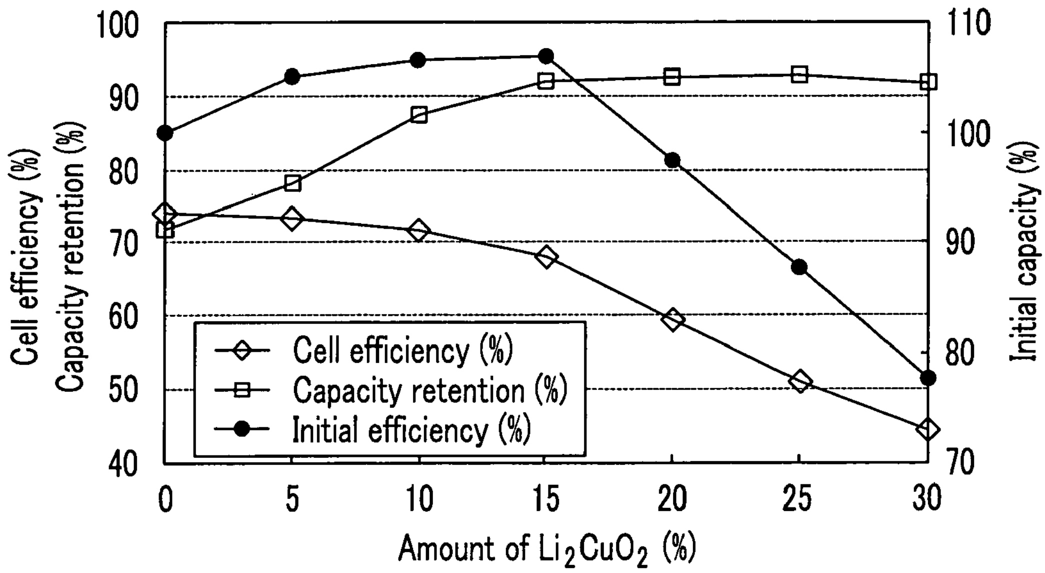
100
90
80
70
60
50
40
Cell efficiency (%)
Capacity retention (%)
110
100
90
80
70
Initial capacity (%)
Cell efficiency (%)
Capacity retention (%)
Initial efficiency (%)
0
5
10
15
20
25
30
Amount of Li2CuO2 (%)

FIG.7

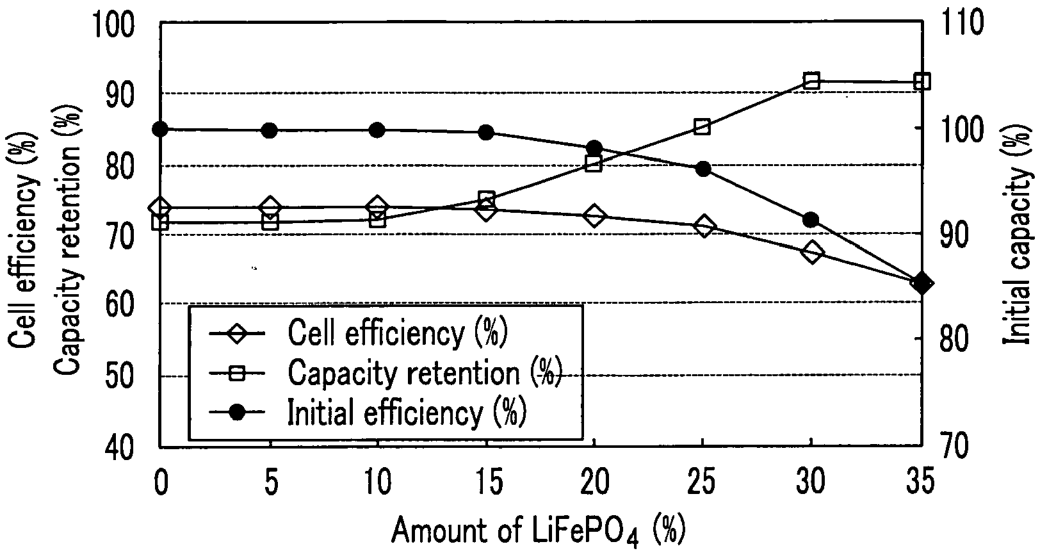
100
90
80
70
60
50
40
110
100
90
80
70
Cell efficiency (%)
Capacity retention (%)
Initial capacity (%)
Cell efficiency (%)
Capacity retention (%)
Initial efficiency (%)
0
5
10
15
20
25
30
35
Amount of LiFePO4 (%)

FIG.8

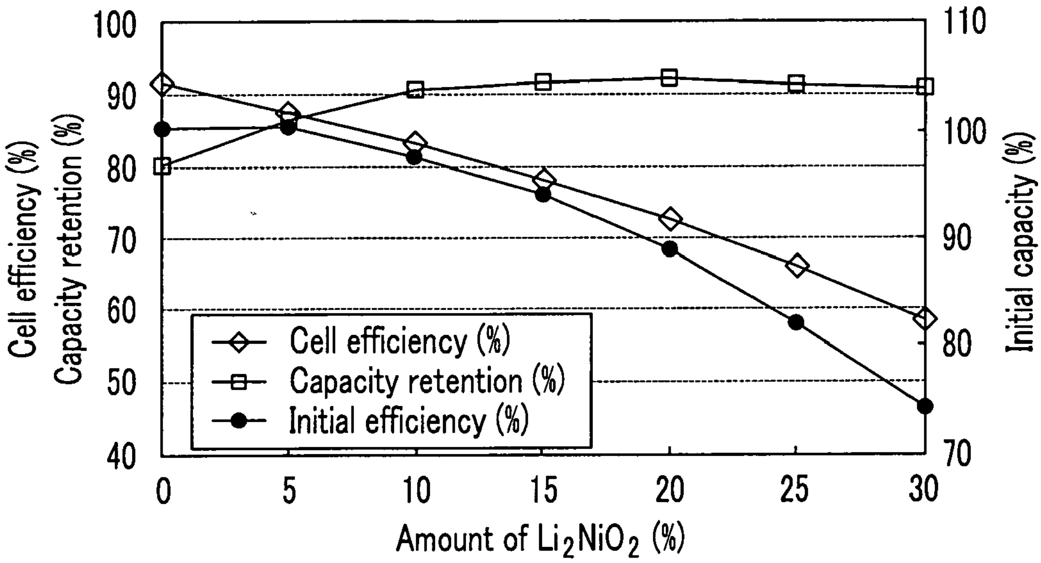
100
90
80
70
60
50
40
110
100
90
80
70
Cell efficiency (%)
Capacity retention (%)
Initial capacity (%)
Cell efficiency (%)
Capacity retention (%)
Initial efficiency (%)
0
5
10
15
20
25
30
Amount of Li2NiO2 (%)

Europäisches Patentamt
European Patent Office
Office européen des brevets

# EUROPEAN SEARCH REPORT

Application Number
EP 09 25 1650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2003 0076153 A (LG CHEMICAL LTD [KR]) 26 September 2003 (2003-09-26)<br>* page 5 - page 6; examples 1-3 *<br>*comparative example 2*<br>* figures 6-10 * | 1-9 | INV.<br>H01M4/58<br><br>ADD.<br>H01M4/36 |
| X | WO 2006/109947 A (LG CHEMICAL LTD [KR]) 19 October 2006 (2006-10-19)<br>* page 4, lines 16-19 *<br>* page 15, line 20 - page 16, line 5 *<br>* page 16, lines 8,9 *<br>* page 17, lines 25-28 *<br>* examples 1,2 * | 1-9 | |
| X | WO 2007/035584 A (T J TECHNOLOGIES INC [US]; HUANG BIYING [US]; MANI SURESH [US]; CHIN J) 29 March 2007 (2007-03-29)<br>* paragraph [0030]; figure 1 * | 1-9 | |
| X | JP 06 342673 A (HITACHI MAXELL) 13 December 1994 (1994-12-13)<br>* paragraphs [0026], [0028], [0029], [0031] - [0033], [0035] * | 1-9 | TECHNICAL FIELDS SEARCHED (IPC)<br>H01M |

The present search report has been drawn up for all claims

| Place of search | Date of completion of the search | Examiner |
|---|---|---|
| Munich | 3 September 2009 | Veit, Claudia |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 25 1650

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2009

| Patent document cited in search report | Publication date | Patent family member(s) | Publication date |
|---|---|---|---|
| KR 20030076153 A | 26-09-2003 | NONE | |
| WO 2006109947 A | 19-10-2006 | CN 101147281 A | 19-03-2008 |
| | | EP 1864344 A1 | 12-12-2007 |
| | | JP 2008532224 T | 14-08-2008 |
| | | KR 20060106772 A | 12-10-2006 |
| | | US 2006251967 A1 | 09-11-2006 |
| WO 2007035584 A | 29-03-2007 | US 2007057228 A1 | 15-03-2007 |
| JP 6342673 A | 13-12-1994 | NONE | |

EPO FORM P0459

For more details about this annex : see Official Journal of the European Patent Office, No. 12/82